# EUROPÄISCHE PATENTANMELDUNG

(11) **EP 3 330 115 A2**
(43) Veröffentlichungstag der Anmeldung: **06.06.2018**
(21) Anmeldenummer: 17188395.2
(22) Anmeldetag: 29.08.2017
(51) Int. Cl.: B60K 1/04, B60L 11/18

(54) **ELEKTRO-LASTWAGEN**

(30) Priorität: 29.08.2016 DE 102016116017; 02.02.2017 DE 102017102064
(71) Anmelder: König Metall GmbH & Co. KG, 76571 Gaggenau (DE); Kerspe, Jobst H., 69256 Mauer (DE); Erhardt GmbH Fahrzeug und Teile, 70619 Stuttgart (DE)
(72) Erfinder: Kerspe, Dr.-Ing. Jobst H., 69256 Mauer (DE); Fischer, Michael, 76571 Gaggenau (DE); Erhardt, Jürgen, 70619 Stuttgart (DE)
(74) Vertreter: Geitz Truckenmüller Lucht Christ

(57) **Zusammenfassung**

Die Erfindung betrifft einen Elektro-Lastwagen (1) mit einem Fahrgestell, auf dem im vorderen Bereich des Elektro-Lastwagens (1) eine Fahrerkabine (2) mit einem Motorraum (7), in dem ein Elektromotor (10) angeordnet ist und im hinteren Bereich ein Ladekoffer (3) auf dem Fahrgestell des Elektro-Lastwagens (1) aufliegt, wobei der Unterbau des Ladekoffers (3) auf den Fahrzeuglängsträgern (4) des Fahrgestells aufsitzt, wobei der den Ladekoffer (3) unterseitig abschließende Kofferboden (5) des Ladekoffers (3) zur Freihaltung eines hinreichenden Federweges mit Abstand oberhalb der Fahrzeuglängsträger (4) angeordnet ist.

Ausgehend von einem Stand der Technik, bei dem derartige Fahrzeuge mit Elektromotoren nachgerüstet werden, wobei die in diesem Zusammenhang erforderlichen Fahrzeugbatterien üblicherweise anstelle des in diesem Zusammenhang nicht mehr benötigten Fahrzeugtankes in die Fahrzeuge integriert werden, schlägt die Erfindung vor, in dem Zwischenraum zwischen den Fahrzeuglängsträgern (4) und dem Kofferboden (5) ein Batteriegehäuse (8) mit wenigstens einer integrierten Batterie (6, 6', 6") vorzusehen, wobei in diesem Zusammenhang ein größerer Einbauraum für die Batterien (6, 6', 6") und damit eine größere Reichweite für die Elektro-Lastwagen (1) zur Verfügung steht, diese im Übrigen in diesem Bereich geschützt sind und außerdem die Isolierung des Batteriegehäuses (8) gleichzeitig zur Isolierung des oberhalb des Batteriegehäuses (8) angeordneten Ladekoffers (3) beiträgt.

## Beschreibung

Die Erfindung betrifft einen Elektro-Lastwagen mit einem Fahrgestell, auf dem im vorderen Bereich des Elektro-Lastwagens eine Fahrerkabine mit einem Motorraum angeordnet ist, in dem sich ein Elektromotor befindet, und im hinteren Bereich ein Ladekoffer auf dem Fahrgestell des Elektro-Lastwagens aufliegt, wobei der Unterbau des Ladekoffers auf den Fahrzeuglängsträgern des Fahrgestells aufsitzt und wobei der den Ladekoffer unterseitig abschließende Kofferboden des Ladekoffers zur Freihaltung eines hinreichenden Federweges mit Abstand oberhalb der Fahrzeuglängsträger angeordnet ist.

Derartige Elektro-Lastwagen sind insbesondere für den innerstädtischen Liefer- und Verteilverkehr bekannt. Z.B. werden derartige Elektro-Lastwagen zur Post- und Paketlieferung eingesetzt. Der Bedarf derartiger voll elektrisch betriebener Kleinlastwagen im Bereich zwischen 3,5 und 7,5 t wird in den nächsten Jahren erheblich steigen, da viele Innenstädte durch die Feinstaubbelastung, Stickoxidbelastung, insbesondere durch Dieselfahrzeuge, aber auch durch die resultierende Lärmbelastung, erheblichen Beeinträchtigungen und Gesundheitsgefährdungen ausgesetzt sind, so dass zwischenzeitlich sogar zeitweise Fahrverbote erwogen werden. Gegenüber dem herkömmlichen Lastwagenverkehr, unter Einsatz von Verbrennungsmotoren, bieten Elektro-Lastwagen den Vorteil, dass die erwähnten Belastungen vollständig entfallen bzw. zumindest aus dem innerstädtischen Bereich verbannt werden. In einer ersten Ausbaustufe werden im Augenblick bestehende Lastkraftwagen auf elektromotorische Antriebe entweder vollständig umgerüstet oder aber als Hybridfahrzeuge mit zusätzlichen Elektromotoren ausgestattet. Die in diesem Zusammenhang bislang erzielten Ergebnisse sind unbefriedigend, weil die Fahrzeuge für einen dauerhaften Elektrobetrieb in der Regel zu schwer sind, die in diesem Zusammenhang zur Verfügung stehenden Batteriekapazitäten zu gering sind und im Übrigen, insbesondere im Lebensmittelbereich, ein erheblicher zusätzlicher Energiebedarf zur Aufrechterhaltung der Kühlung besteht, der mit Elektrofahrzeugen nur schwerlich bedient werden kann.

Üblicherweise besteht ein derartiger Lastkraftwagen aus einem Fahrgestell, auf dem die Fahrerkabine sowie ein Kofferaufbau zur Ausbildung eines Laderaums angeordnet sind. Im Einzelnen umfasst das herstellerseitig gelieferte Fahrgestell die Fahrerkabine, die Längsträger zur Auflagerung des Ladekoffers, der aber nicht Bestandteil des Fahrgestells ist, sowie die Fahrachsen. Alle weiteren An- und Aufbauten erfolgen dann individuell. Dabei ist der Ladekoffer üblicherweise nicht unmittelbar auf dem Fahrgestell aufliegend angeordnet, sondern mit einem deutlichen Abstand oberhalb des Fahrgestells angeordnet, um einen hinreichenden Federweg für die Räder des Lastkraftwagens zur Verfügung zu stellen. In dem Bereich zwischen dem den Ladekoffer unterseitig abschließenden Kofferboden und dem Fahrzeuggestell ist daher üblicherweise ein vergleichsweise großvolumiger und ungenutzter Raum vorhanden. Der beschriebene Fahrzeugunterbau ist darüber hinaus auch gewichtsrelevant.

Die zum Betrieb von Elektro-Lastwagen erforderlichen Batterien werden bei nachgerüsteten Fahrzeugen üblicherweise in dem Bereich angeordnet, in dem ansonsten der Treibstofftank für den Betrieb des Verbrennungsmotors angebracht war. Die insoweit gewählte Batterieposition ist aufgrund des in diesem Zusammenhang zur Verfügung stehenden begrenzten Platzbedarfs ungünstig. Außerdem müssen die zur Bestromung von Elektro-Lastwagen eingesetzten Batterien mit zusätzlichen Sicherheitsmaßnahmen, wie etwa einem Aufprallschutz, versehen werden, was wiederum zusätzliche konstruktive Maßnahmen erfordert und im Übrigen zu einem erhöhten Fahrzeuggewicht führt, was wiederum mit einem erhöhten Energiebedarf bezahlt werden muss.

Ausgehend von diesem Stand der Technik liegt der Erfindung die Aufgabe zu Grunde, ein möglichst leichtes Kühlfahrzeug mit einer optimierten Raumnutzung für den vollelektrischen Betrieb, insbesondere im innerstädtischen Bereich, zur Verfügung zu stellen.

Die der Erfindung zu Grunde liegende Aufgabe wird durch einen Elektro-Lastwagen gemäß den Merkmalen des geltenden Anspruchs 1 oder des geltenden Anspruchs 2 gelöst. Vorteilhafte Weiterbildungen der Erfindung können den abhängigen Ansprüchen 3-25 entnommen werden.

Gemäß dem geltenden Anspruch 1 ist in dem Zwischenraum zwischen dem Fahrzeuglängsträger und dem Kofferboden des Ladekoffers ein Batteriegehäuse mit wenigstens einer integrierten Batterie angeordnet. Dies hat zunächst den Vorteil, dass in diesem Bereich ein hinreichendes Volumen auch für größere Batterieeinheiten zur Verfügung steht. Im Übrigen hat die Anordnung der Batterieeinheiten in diesem Bereich den Vorteil, dass die Batterien gleichmäßig unterhalb des Kofferbodens angeordnet sein können und somit ein erhebliches Gewicht unterhalb der Ladeebene des Elektro-Lastwagens positioniert wird, was sowohl zu einer Verbesserung der Straßenlage als auch des Feder-Komforts des Lastwagens beiträgt. Dabei sind Batteriegehäuse und Ladekoffer eine miteinander verbundene Einheit derart, dass der Kofferboden des Ladekoffers zugleich die Oberfläche des Batteriegehäuses ist. Dies ist dadurch ermöglicht, dass das Batteriegehäuse zu dem in diesem Zusammenhang erforderlichen Lastabtrag ertüchtigt ist, etwa weil das Batteriegehäuse eine so genannte gestützte Vakuumisolierung darstellt. Demensprechend ist das Batteriegehäuse zumindest doppelwandig mit einer vakuumdichten Hülle ausgebildet, die evakuiert ist. Des Weiteren ist diese Batteriewandung vollständig mit einer mikro- oder nanoporösen Struktur ausgefüllt. Dieser Füllstoff besitzt eine je nach Aufbau dieser Struktur mehr oder minder belastbare Stützfunktion, die in der hier vorliegenden Anwendung sicherstellt, dass etwa eingeleitete Kräfte oder Momente, vorzugsweise ohne Bedarf an weiteren Stützelementen, aufgenommen, bzw. in das Fahrgestell abgeleitet werden können. Deshalb ist es möglich, dass die Oberseite des Batteriegehäuses den Kofferboden des Ladekoffers ausbildet.

In alternativer Ausgestaltung kann das Batteriegehäuse auch zwischen den Fahrzeuglängsträgern angeordnet sein. Dies hat den Vorteil eines verbesserten Seitenaufprallschutzes für das Batteriegehäuse und insbesondere für die in diesem Gehäuse aufgenommene Batterie bzw. Batterien. Außerdem wird der Schwerpunkt des Elektrolastwagens tiefer gelegt und damit die Fahrzeugsicherheit insgesamt verbessert. Im Übrigen wird der im Rahmen der Fahrzeugkonstruktion zur Verfügung stehende Raum besser ausgenutzt.

Die in beiden Ausführungen realisierte Vakuumisolierung des Batteriegehäuses hat nicht nur in Bezug auf die in dem Batteriegehäuse angeordneten Batterien Vorteile, sondern stellt gleichzeitig auch eine effiziente Wärmedämmung unterhalb des Kofferbodens des Ladekoffers dar, die die Fracht des LKWs gegenüber der Wärmeabstrahlung des Straßenbelages, insbesondere im Sommer, schützt. Im Übrigen stellt das Batteriegehäuse damit gleichzeitig eine crashsichere Umhüllung für die in dem Batteriegehäuse aufgenommenen Batterien dar, so dass vor dem Hintergrund der Anordnung des Batteriegehäuses über dem Fahrzeuglängsträger bereits ein weitgehender Seitenaufprallschutz für die in dem Batteriegehäuse aufgenommenen Batterien gegeben ist. Erforderlichenfalls kann unterhalb der Plattform des Batteriegehäuses ein zusätzlicher Steinschlagschutz, etwa in Form von zäh-stabilen und/oder formstabilen Fasermatten angeordnet sein.

Der zum Antrieb des Elektro-Lastwagens erforderliche Elektromotor kann entweder im vorderen Bereich des Elektro-Lastwagens vor und/oder unter der Fahrerkabine in einem hierfür vorgesehenen Motorraum angeordnet sein. Alternativ kann ein derartiger Elektro-Lastwagen auch mit einem oder mehreren an sich bekannten Nabenmotoren angetrieben werden, der oder die dann in einer oder in beiden Fahrzeugachsen des Elektrolastwagens angeordnet sein können, so dass in diesem Fall dann im Bereich der Fahrerkabine zusätzlicher Platz für andere Anwendungen und Ausstattungen des Elektrolastwagens gegeben ist.

In vorteilhafter Ausgestaltung können mehrere Batterien, vorzugsweise drei Batterien, in diesem Batteriegehäuse unterhalb des Kofferbodens angeordnet werden, so dass die Batteriegehäuse unmittelbar auf den Fahrzeuglängsträgern aufliegen. Die Verwendung mehrerer separater Batterien hat den Vorteil, dass hierdurch im Bereich von Ladestationen gegebenenfalls nur einzelne Batterien, die inzwischen geladen wurden, ausgetauscht werden müssen, so dass der insoweit bestehende Umrüstaufwand vergleichsweise gering ist. Im Übrigen können aus Gründen der Gewichtsersparnis auch auf die jeweilige Fahrstrecke angepasste Batterien eingesetzt werden, bzw. muss das in dem Batteriegehäuse insgesamt zur Verfügung stehende Volumen nicht vollständig ausgenutzt werden, so dass dies einen Beitrag zur Gewichtsreduzierung des Fahrzeuges darstellt.

In der Ausführung, dass das Batteriegehäuse zwischen den Fahrzeuglängsträgern angeordnet ist, können ebenfalls mehrere Batterien in dem Batteriegehäuse angeordnet sein, wobei das Batteriegehäuse derart zwischen den Fahrzeuglängsträgern angeordnet ist, dass es ober- und unterseitig über die Fahrzeuglängsträger übersteht.

Zusätzlich können die einzelnen Batterien auch durch Gehäusezwischenwände voneinander separiert angeordnet sein. Dies ist insbesondere dann sinnvoll, wenn Batterien eingesetzt werden, die üblicherweise auf unterschiedlichen Temperaturniveaus betrieben werden.
In Verbindung mit der Ausführung des Elektrolastwagens derart, dass mehrere Batterien in dem Batteriegehäuse angeordnet sind, hat es sich bewährt, ausgewählte Batterien zu Batteriemodulen zusammen zu fassen, sowie die einzelnen Batterien und/oder die zu Batteriemodulen zusammengefassten Batterien in je einem Käfig formschlüssig aufzunehmen, um die Crash-Sicherheit der Fahrzeuge zu erhöhen.

Die Käfige sind aus Gründen der Gewichtsersparnis aus leichtem glasfaserverstärktem Kunststoff, kurz GFK, hergestellt. Die Käfige selbst werden innerhalb des Batteriegehäuses durch Verklebung gesichert und/oder in einer größeren Käfigeinheit zusammengefasst, die ihrerseits in dem Batteriegehäuse verklebt ist.

Sowohl die größere Käfigeinheit als auch die Käfige können zusätzlich mit gegenüber dem Batteriegehäuse abgestützten Spannelementen form- und kraftschlüssig gesichert werden.

Dabei hat es sich als praktisch erwiesen, wenn das Batteriegehäuse in mehrere Einheiten, d.h. in mehrere Einschübe unterteilt ist, so dass die einzelnen Batterien in die jeweiligen Einschübe einfach eingeschoben werden können, wobei die Einschübe mit Vorteil mit entsprechenden Steckkontakten versehen sind, so dass die eingeschobenen Batterien über die in dem Batteriegehäuse angeordneten Steckkontakte leicht angeschlossen werden können.
Die Unterteilung des Batteriegehäuses in mehrere voneinander getrennte Einschübe hat den Vorteil, dass in die einzelnen Einschübe unterschiedliche Batteriekonfigurationen eingesetzt werden können, beispielsweise Hoch-Volt-Batterien, die mit dem Antriebsstrang des Fahrzeuges verbunden sein können, bzw. Nieder-Volt-Batterien zur Bestromung der Fahrzeugelektronik des Fahrzeuges.

In vorteilhafter Weiterbildung dieser Lösung sind die separaten Einschübe des Batteriegehäuses jeweils mit individuellen Steckerkupplungen zum Anschluss der korrespondierenden Batterien versehen, wobei dann die Batterien selbst wiederum mit korrespondierenden Steckern bestückt sind, so dass technisch sichergestellt ist, dass die für die jeweilige Spannungsebene zutreffende Batterie auch in dem jeweils zutreffenden Einschub angeschlossen wird, weil die hierfür vorgesehenen Stecker nur mit den jeweils korrespondierenden Steckerkupplungen passend ausgelegt sind.

In weiter verbesserter Ausführung ist das Batteriegehäuse als Isoliergehäuse mit einer Doppelwandung ausgeführt. Dabei ist zwischen der Innen- und Außenwandung des Batteriegehäuses ein poröses, vorzugsweise micro- oder nanoporöses, Füllmaterial angeordnet, das unter Ausbildung eines zumindest leichten Vakuums evakuiert ist. Das Füllmaterial besitzt darüber hinaus eine stützende Funktion. Insgesamt realisiert das Batteriegehäuse demnach eine gestützte Vakuumisolierung.

Der Ladekoffer selbst ist mit Vorteil ebenfalls als Sandwichelement derart ausgebildet, dass dessen Seitenwände, dessen Deckenelement und/oder dessen Ladebordwand ebenfalls jeweils eine Innen- und eine Außenwandung aufweisen, zwischen denen jeweils ebenfalls eine gestützte Vakuumisolierung angeordnet ist. Auch in diesem Bereich ist somit eine effiziente Wärmedämmung verwirklicht, die wiederum dafür sorgt, dass der Energieaufwand, um innerhalb des Ladekoffers eine, etwa zum Lebensmitteltransport geeignete, konstante Temperatur aufrechtzuerhalten, deutlich reduziert ist. Im Übrigen können derart gestützte Vakuumisolierungen mit einem vergleichsweise geringen Gewichtsaufwand hergestellt werden.

Die Ladebordwand ist üblicherweise in Verbindung mit derartigen Lastwagen auf die jeweilige Anwendung abgestimmt, so dass die Ladebordwand bedarfsweise Bestandteil des Fahrgestells oder aber auch Bestandteil des Ladekoffers selbst sein kann. Diese Variationsmöglichkeit besteht auch i.V.m. den erfindungsgemäßen Elektro-Lastwagen.

Zur Kühlung des Ladekoffers ist insbesondere die der Fahrerkabine des Elektro-Lastwagens zugewandte Innenfläche des Ladekoffers inwändig mit einer Kühlfläche bestückt, die aufgrund ihrer Großflächigkeit eine effiziente Kühlung des Ladekoffers ermöglicht.

In abermals vorteilhafter Weiterbildung ist die Sandwichstruktur des Ladekoffers ganz oder teilweise in einer Leichtbauweise, etwa aus Waben- oder Stabelementen, realisiert, wobei die innenliegende Wabenstruktur mit leichtem, nanoporösem Dämmstoffgranulat gefüllt ist und im weiteren die Wabenstruktur zur Ausbildung des Sandwichelementes beidseitig mit Deckplatten beklebt ist. Auch dies stellt wiederum eine passive Maßnahme zur Aufrechterhaltung der innerhalb des Ladekoffers gewünschten Temperatur dar, die mit einem vergleichsweise geringen zusätzlichen Gewicht bezahlt wird, das nur einen geringen zusätzlichen Energiebedarf, insbesondere im Vergleich zu dem reduzierten Energiebedarf zur Kühlung des Ladekoffers, verursacht.

Die dem Ladekoffer zugeordneten Kühlaggregate bzw. das dem Ladekoffer zugeordnete Kühlaggregat sind/ist dabei auf dem Dach der Fahrerkabine des Elektro-Lastwagens angeordnet, so dass die Abwärme des Kühlaggregates nicht im Inneren des Ladekoffers abgegeben wird, sondern an die Umgebung des Elektro-Lastkraftwagens. Diese Abwärme kann bedarfsweise auch zur Klimatisierung der Fahrerkabine genutzt werden. Alternativ können die Kühlaggregate auch in den Batterie-Einschüben oder zumindest in deren Nähe angeordnet sein. In diesem Fall ist es auch denkbar, die in der Nähe der Batterien angeordneten Kühlaggregate auch in das Thermomanagement der Batterien einzubinden.

Darüber hinaus kann die Abwärme, die im Zusammenhang mit der Klimatisierung des Ladekoffers anfällt, in entsprechenden Speicherelementen, die beispielsweise ebenfalls in dem Batteriegehäuse angeordnet sein können, gespeichert werden. Dies gilt auch für die beim Betrieb der Batterien anfallende exotherme Wärme, die ebenfalls an dieser Stelle zwischengespeichert werden kann bzw. zur Beheizung der Fahrerkabine eingesetzt werden kann. Im Übrigen kann diese Wärme auch eingesetzt werden, um die Batterien bei niedrigen Umgebungstemperaturen, etwa unter 10 Grad, so zu beheizen, dass die Zellen hohe Ladeströme - z.B. während des Rekuperationsbetriebs des Fahrzeuges - aufnehmen.

Während des Ladebetriebs der i.V.m. dem Elektro-Lastkraftwagen eingesetzten Batterien, können in das Batteriegehäuse so genannte Phase-Change-Material (PCM) -Batterien eingesetzt und geladen werden, die dann im Fahrbetrieb zur Kühlung des Ladekoffers beitragen, indem sie über geeignete Wärmeüberträger ihre Kühlenergie an den Ladekoffer abgeben.

Zusätzlich können dem Ladekoffer des Elektro-Lastwagens regenerative Kühlelemente, vorzugsweise auf Zeolith-/Wasserbasis, zugeordnet sein, um auf diese Weise, ohne zusätzlichen Energiebedarf aus der Fahrzeugbatterie während der Fahrt, zur Kühlung des Ladekoffers beizutragen.

Insbesondere im Winter sind auch Anforderungen denkbar, bei denen der Ladekoffer des Elektro-Lastkraftwagens beheizt werden muss. In diesem Zusammenhang hat es sich bewährt, in den Wandelementen und/oder den Kofferboden des Ladekoffers regenerierbare Wärmespeicher und/oder elektrische Heizelemente anzuordnen, die dann von den im Batteriegehäuse angeordneten Wärmespeichern versorgt werden.

In abermals verbesserter Ausgestaltung können die Seitenwände und/oder das Dachelement des Ladekoffers außenseitig mit Solarmodulen beklebt sein, so dass mittels dieser Solarmodule eine Nachladung der in dem Batteriegehäuse aufgenommenen Batterien während des Fahrbetriebes sichergestellt ist, so dass hierdurch die Reichweite des Elektro-Lastwagens verbessert werden kann.

In weiter verbesserter Ausführung ist der Elektro-Lastwagen mit einer Datenerfassungseinheit versehen, die insbesondere den jeweiligen Standort des Elektrolastwagens, dessen Batteriezustand, die Innentemperatur des Ladekoffers und/oder weitere Fahrzeugdaten erfasst und im weiteren drahtlos, vorzugsweise über Telemetrie, an einen Zentralrechner übermittelt, der insgesamt zur Steuerung der Fahrzeugflotte eingesetzt wird. Hierdurch kann im Wege eines vernünftigen und rechnergestützten Flottenmanagements, etwa in Verbindung mit einer Trackingfunktion, die Fahrstrecke der Elektro-Lastwagen an dessen aktuelle Reichweite jeweils angepasst werden und somit für eine weitere Optimierung des Energieverbrauchs, diesmal flottenübergreifend, gesorgt werden.

Die Erfindung wird anhand eines in der Zeichnung nur schematisch dargestellten Ausführungsbeispiels näher erläutert.

Es zeigen:
- Fig. 1:: einen Elektro-Lastwagen mit einem Ladekoffer in einer Seitenansicht mit auf den Fahrzeuglängsträgern aufliegendem Batteriegehäuse,
- Fig. 2:: den Ladekoffer des in Figur 1 dargestellten Elektro-Lastwagens in einer Querschnittansicht,
- Fig. 3:: Batteriegehäuse mit zwei Batteriemodulen in einer Querschnittansicht,
- Fig. 4:: einen Elektro-Lastwagen mit einem Ladekoffer in einer Seitenaufsicht mit zwischen den Fahrzeuglängsträgern angeordneten Batteriegehäuse in einer Seitenansicht und,
- Fig. 5:: den Elektro Lastwagen gemäß Fig. 4 in einer Schnittansicht auf Höhe der Fahrzeuglängsträger.

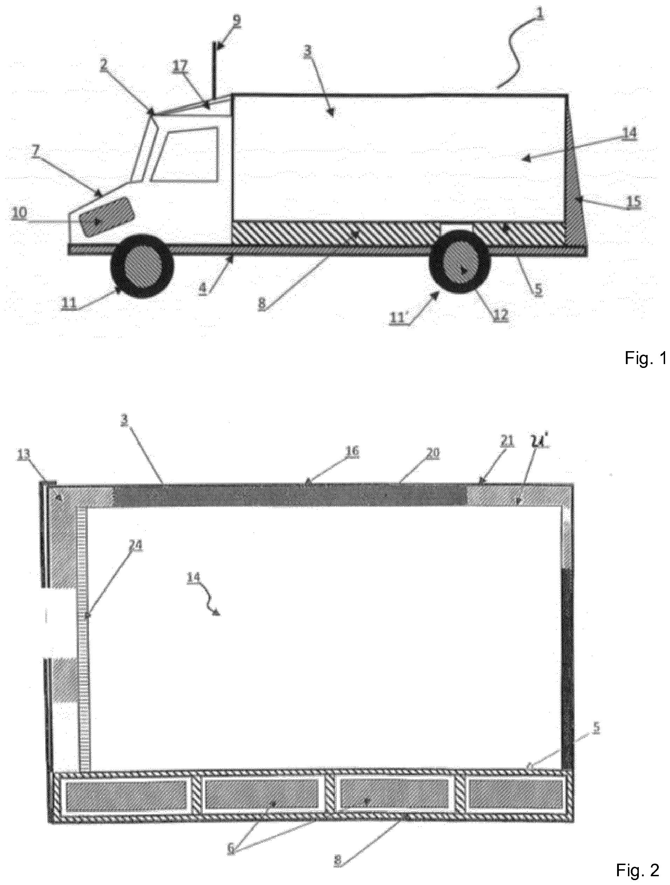

Figur 1 zeigt einen Elektro-Lastwagen 1 mit einer Fahrerkabine 2 und einem Ladekoffer 3, die jeweils auf den beidseitig des Elektro-Lastwagens 1 angeordneten Fahrzeuglängsträgern 4 aufliegen, wobei unterhalb des den Ladekoffer 3 untergreifenden Kofferbodens 5 ein Batteriegehäuse 8 mit mehreren Einschüben für in diesem Ausführungsbeispiel insgesamt drei Batterien 6, 6', 6" angeordnet ist. Bei richtigem Verständnis ist der Kofferboden 5 gleichzeitig die Oberfläche des Batteriegehäuses. Ladekoffer 3 und Batteriegehäuse 8 stellen also eine abgeschlossene Einheit dar.

Dabei ist in dem vor und unterhalb der Fahrerkabine 2 angeordneten Motorraum 7 ein geregelter Elektromotor 10 angeordnet. Alternativ hierzu können auch den Rädern 11, 11' des Elektro-Lastwagens 1 jeweils unmittelbar von den in dem Batteriegehäuse 8 angeordneten Batterien 6, 6', 6" bestromte Radnabenmotoren 12 zugeordnet sein. Der Ladekoffer 3 ist von einer der Fahrerkabine 2 zugewandten Frontwand 13, zwei beidseitigen Seitenwänden 14, sowie von einer der Fahrerkabine 2 entfernt angeordneten Ladebordwand 15 und einem oberseitig den Ladekoffer 3 abschließenden Deckenelement 16 begrenzt. Sowohl die Seitenwände 14, als auch das Deckenelement 16 können in hier nicht weiter dargestellter Weise mit Solarelementen beklebt sein, die jeweils einen Ladestrom für die in dem Batteriegehäuse 8 aufgenommenen Batterien 6, 6', 6" erzeugen.

Zusätzlich ist oberhalb der Fahrerkabine 2 ein Kühlaggregat 17 angeordnet, das in nicht weiter dargestellter Weise Kühlluft produziert und in den Ladekoffer 3 einspeist. Aufgrund der Anordnung des Kühlaggregates 17 oberhalb der Fahrerkabine 2 wird die Abwärme des Kühlaggregates 17 an die Umgebung des Elektro-Lastwagens 1 abgegeben. Im Übrigen ist die Fahrerkabine 2 mit einer Antenneneinheit 9, die beispielsweise ebenfalls oberhalb der Fahrerkabine 2 angeordnet sein kann, zum Aufbau einer drahtlosen Verbindung versehen, um relevante Fahrzeugdaten, etwa betreffend die Innentemperatur des Ladekoffers 3, den Ladezustand der in dem Batteriegehäuse 8 aufgenommenen Batterien 6, 6', 6" und sonstiger Fahrzeugdaten, an eine entfernt angeordnete Datenverarbeitungseinheit zur Realisierung eines Flottenmanagements, zu übermitteln.

Gemäß der Detailansicht des Ladekoffers 3 in Figur 2 sind sowohl die Frontwand 13, als auch die Seitenwände 14, die Ladebordwand 15 und das Deckenelement 16 des Ladekoffers 3 jeweils in einer Sandwich-Bauweise hergestellt, wobei den stabilen Wandelementen, die mit Vorteil in Leichtbauweise hergestellt sind und jeweils mit einer gestützten Vakuumisolierung, bestehend aus einem mikro- oder nanoporösen Füllmaterial 20, versehen sind, zugleich eine Stütz- und eine Isolierfunktion zukommt. Dabei wird dieses Füllmaterial 20 beidseitig mit geeigneten Deckplatten 21, 21' beklebt und, nachdem diese vakuumdicht verschlossen sind, über ein geeignetes, hier nicht weiter dargestelltes, Ventil evakuiert, so dass zumindest ein leichtes Vakuum im Innenbereich der vorstehend erläuterten Umhüllung des Ladekoffers 3 erzeugt wird und hierdurch ein zusätzlicher Isoliereffekt erzielt wird.

Zur Verbesserung der Kühleigenschaften des Elektro-Lastwagens 1 ist die Frontwand 13 auf der dem Inneren des Ladekoffers 3 zugewandten Seite mit einer großflächigen Kühlfläche 24 versehen, wobei die Kühlfläche 24 in die Frontwand 13 integriert ist.

Analog ist auch das Batteriegehäuse 8 in Sandwichbauweise hergestellt, wobei die Wandungen des Batteriegehäuses 8 ebenfalls als gestützte VakuumIsolierung ausgebildet sind.

Dabei sind sowohl der Ladekoffer 3, als auch das unterhalb des Ladekoffers 3 angeordnete Batteriegehäuse 8 mittels eines sowohl das Batteriegehäuse 8 als auch den Ladekoffer 3 zumindest abschnittsweise übergreifenden Verbindungselementes 23 fest miteinander zu einer geschlossenen Einheit verbunden.

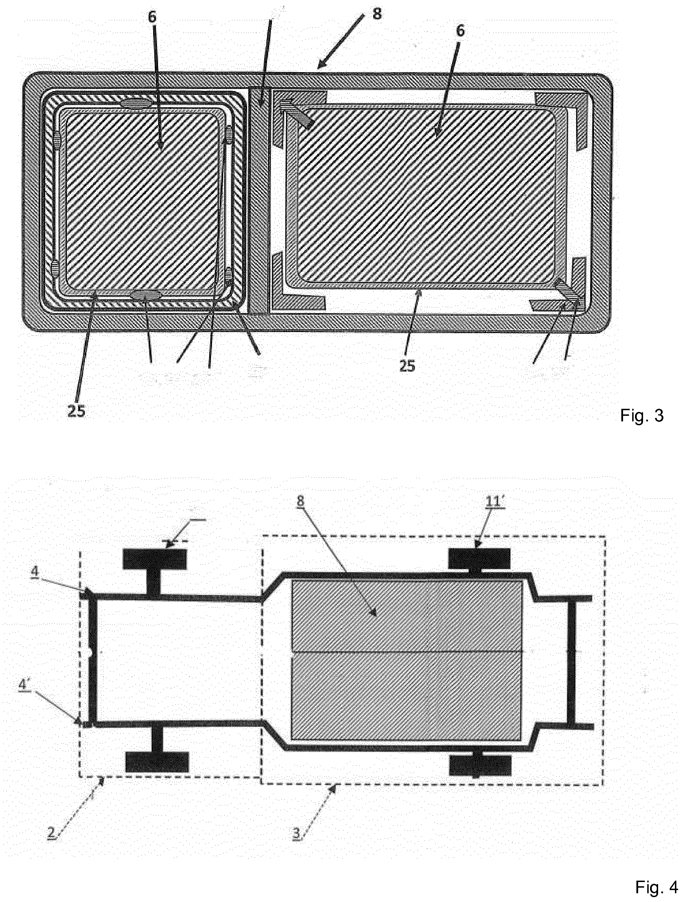

Figur 3 zeigt ein Batteriegehäuse 8 mit zwei Batterien bzw. Batteriemodulen 6, 6' in einer Querschnittansicht. Grundsätzlich sind die in dem Fahrzeug mitgeführten Batteriemodule erheblichen Belastungen ausgesetzt. Die bis zu mehreren 100 kg schweren Batterien werden im Zusammenhang mit ihrer Zulassung extremen Belastungen bis zu 80 g ausgesetzt. Das nachstehend beschriebene erfindungsgemäße Batteriegehäuse stellt dabei bereits einen sehr guten Schutz für die in dem Batteriegehäuse aufgenommenen Batterien bzw. Batteriemodule dar. Dabei muss allerdings sichergestellt sein, dass die Batterien unter allen Umständen sicher im Gehäuse befestigt sind.

Aus dem Stand der Technik ist es bekannt, derartige Batteriezellen inklusive den elektrischen Verbindungen zu Modulen zusammenzufassen, sowie dann die einzelnen Module mittels metallischer Schienensysteme oder anderen Befestigungselementen, die jeweils mit den metallischen Innenwänden des Batteriegehäuses verschweißt sind zu verbinden und im Gehäuse zu fixieren. Dabei müssen die punkt- oder linienförmigen Schweißverbindungen im Belastungsfalle größeren Kräften standhalten und gegebenenfalls erhebliche Momente übertragen. Die in diesem Zusammenhang zu fertigenden Verbindungen müssen sehr aufwändig hergestellt werden. Im Übrigen weisen die vorbekannten Befestigungssysteme ein erhebliches Eigengewicht auf.

Bei der in Figur 3 dargestellten Lösung sind die Batteriemodule 6, 6' formschlüssig, gegen ein Verrutschen gesichert in einer leichten Käfigstruktur 25 verbaut. Dabei ist dieser Käfig mit Vorteil aus leichtem glasfaserverstärktem Kunststoff, kurz GFK, hergestellt. In dem Batteriegehäuse 8 bzw. 8' ist ein weiterer GFK-Käfig 27 großflächig eingeklebt. Nachdem Einfügen dieser Modul-Käfig-Einheit 6, 25, wird diese über form- und kraftschlüssige Spannelemente 26, 26' und 26" in der Einbaulage fixiert. Als in diesem Zusammenhang geeignete Spannelemente 26, 26' und 26" kommen in diesem Zusammenhang Keilschieber, Expanderelemente oder Baugruppen mit einem Bajonettverschluss oder ähnlichem Verschluss in Betracht.

In demselben Batteriegehäuse 8 ist auf der rechten Seite eine alternative Befestigung eines Batteriemoduls 6' in dem Batteriegehäuse 8 dargestellt. In diesem Falle sind Expanderelemente 28, 28' direkt an dem Käfig 25 angeordnet. Nachdem das Batteriemodul 6' in das Batteriegehäuse 8 eingebracht ist, werden die Expanderelemente 28, 28' bestimmungsgemäß expandiert und verspannen somit das Batteriemodul 6' in seiner bestimmungsgemäßen Einbaulage innerhalb des Batteriegehäuses 8. In diesem Zusammenhang ist es auch denkbar, die Innenwand des Batteriegehäuses 8 mit korrespondierenden Sicken zu versehen, in die sich dann die erwähnten Expanderelemente 28, 28' formschlüssig einfügen.

Die Vorteile dieser zuletzt beschriebenen Ausführung liegen in einer großflächigen Krafteinleitung in die Gehäusestruktur des Batteriegehäuses 8, ohne dass dabei eine Überbelastung des inneren Gehäuses zu befürchten steht. Im Übrigen kann diese Lösung im Leichtbau hergestellt werden. Außerdem ist zu jedem Zeitpunkt eine Potenzialtrennung zwischen Batterie 6, 6'und Batteriegehäuse 8 zu jedem Zeitpunkt gewahrt.

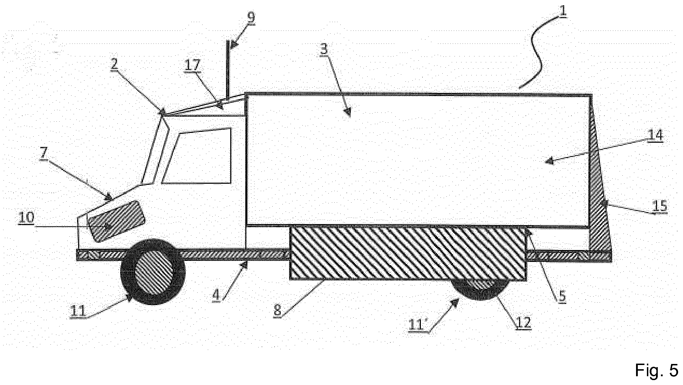

Fig. 4 zeigt eine alternative Ausführung des Elektro-Lastwagens 1 derart, dass das Batteriegehäuse 8 derart zwischen den Fahrzeuglängsträgern 4, 4' angeordnet ist, dass das Batteriegehäuse (8) unter- und oberseitig über die Fahrzeuglängsträger 4, 4' übersteht. Dabei ist das Batteriegehäuse (8) gemäß der der in Fig. 5 dargestellten Schnittansicht zwischen den Fahrzeuglängsträgern 4, 4' angeordnet. Diese Ausführung hat die bereits erwähnten Vorteile eines tiefergelegten Schwerpunktes des Elektro-Lastwagens 1 in Verbindung mit einer erhöhten Crash-Sicherheit für die zwischen den Fahrzeuglängsträgern aufgenommene Batterie bzw. Batterien.

Vorstehend ist somit ein Elektro-Lastwagen 1 in zwei unterschiedlichen Ausführungen beschrieben, der aufgrund der Anordnung der Batterien 6, 6',6" jeweils unterhalb des Kofferbodens des Ladekoffers 3 eine verbesserte Straßenlage besitzt, sowie weitere Vorteile hinsichtlich des Batteriemanagements eröffnet und im Übrigen mit einem Ladekoffer 3 und einem Batteriegehäuse 8 versehen ist, die beide mit einer gestützten Vakuumisolierung versehen sind, die passiv dazu beiträgt, dass der zur Kühlung des Ladekoffers 3 eingesetzte Energiebedarf wirksam reduziert ist und im Übrigen der der durch das Batteriegehäuse 8 repräsentierte Kofferboden 5 des Ladekoffers 3 bereits die erforderliche Stützfunktion besitzt und überdies vakuumisoliert ausgebildet ist. Die dementsprechend ausgestatteten Elektro-Lastwagen 1 besitzen daher eine größere Reichweite und können daher allein stromgestützt eingesetzt werden, so dass diese einen wirksamen Beitrag zur Reduzierung der Umweltbelastung, etwa durch Feinstaub, insbesondere im innerstädtischen Bereich leisten.

**BEZUGSZEICHENLISTE**

| | | | |
|---|---|---|---|
| 1 | Elektro-Lastwagen | 20 | Füllmaterial |
| 2 | Fahrerkabine | 21, 21' | Deckplatten |
| 3 | Ladekoffer | 23 | Verbindungselement |
| 4 | Fahrzeuglängsträger | 24 | Kühlfläche |
| 5 | Kofferboden | 25 | Käfigstruktur |
| 6, 6', 6" | Batterie | 26,26', 26" | Spannelemente |
| 7 | Motorraum | 27 | Käfig |
| 8 | Batteriegehäuse | 28, 28' | Expanderelement |
| 9 | Antenneneinheit | | |
| 10 | Elektromotor | | |
| | | | |
| 11, 11' | Rad | | |
| 12 | Radnabenmotor | | |
| 13 | Frontwand | | |
| 14 | Seitenwand | | |
| 15 | Ladebordwand | | |
| 16 | Deckenelement | | |
| 17 | Kühlaggregat | | |

## Patentansprüche

1. Elektro-Lastwagen (1) mit einem Fahrgestell, auf dem im vorderen Bereich des Elektro-Lastwagens (1) eine Fahrerkabine (2) und im hinteren Bereich ein Ladekoffer (3) auf dem Fahrgestell des Elektro-Lastwagens (1) aufliegt, wobei der Unterbau des Ladekoffers (3) auf den Fahrzeuglängsträgern (4) des Fahrgestells aufsitzt, wobei der den Ladekoffer (3) unterseitig abschließende Kofferboden (5) des Ladekoffers (3) zur Freihaltung eines hinreichenden Federweges mit Abstand oberhalb der Fahrzeuglängsträger (4) angeordnet ist,
**dadurch gekennzeichnet, dass** in dem Zwischenraum zwischen dem Fahrzeuglängsträger (4) und dem Kofferboden (5) ein Batteriegehäuse (8) mit wenigstens einer integrierten Batterie (6, 6', 6") derart angeordnet ist, dass Batteriegehäuse (8) und Ladekoffer (3) als miteinander verbundene, vorzugsweise gekapselte Einheit ausgebildet sind, wobei die dem Ladekoffer (3) zugewandte Oberfläche des Batteriegehäuses (8) zugleich den Kofferboden (5) des Ladekoffers (3) darstellt und das Batteriegehäuse (8) zum Lastabtrag ertüchtigt ist, wobei das Batteriegehäuse (8) unmittelbar auf den Fahrzeuglängsträgern (4) aufliegt.

2. Elektro-Lastwagen (1) mit einem Fahrgestell, auf dem im vorderen Bereich des Elektro-Lastwagens (1) eine Fahrerkabine (2) und im hinteren Bereich ein Ladekoffer (3) auf dem Fahrgestell des Elektro-Lastwagens (1) aufliegt, wobei der Unterbau des Ladekoffers (3) auf den Fahrzeuglängsträgern (4) des Fahrgestells aufsitzt, wobei der den Ladekoffer (3) unterseitig abschließende Kofferboden (5) des Ladekoffers (3) zur Freihaltung eines hinreichenden Federweges mit Abstand oberhalb der Fahrzeuglängsträger (4) angeordnet ist,
**dadurch gekennzeichnet, dass** in dem Zwischenraum zwischen den Fahrzeuglängsträgern (4) unterhalb des Kofferbodens (5) ein Batteriegehäuse (8) mit wenigstens einer integrierten Batterie (6, 6', 6") derart angeordnet ist, dass Batteriegehäuse (8) und Ladekoffer (3) als miteinander verbundene, vorzugsweise gekapselte Einheit ausgebildet sind, wobei die dem Ladekoffer (3) zugewandte Oberfläche des Batteriegehäuses (8) zugleich den Kofferboden (5) des Ladekoffers (3) darstellt und das Batteriegehäuse (8) zum Lastabtrag ertüchtigt ist.

3. Elektro-Lastwagen (1) nach Anspruch 1 oder 2, **dadurch gekennzeichnet, dass** im vorderen Bereich des Elektro-Lastwagens (1) vor und/oder unter der Fahrerkabine (2) ein Motorraum ((7) angeordnet ist, der mit einem Elektromotor bestückt ist oder der Elektromotor bzw. die Elektromotoren, als Nabenmotor bzw. Nabenmotoren jeweils in der oder den angetriebenen Fahrzeugachsen des Elektro-Lastwagens (1) angeordnet ist bzw. sind.

4. Elektro-Lastwagen (1) nach Anspruch 1, 2 oder 3, **dadurch gekennzeichnet, dass** mehrere Batterien (6, 6', 6"), vorzugsweise drei Batterien (6, 6', 6"), in dem Batteriegehäuse (8), jeweils voneinander beabstandet, angeordnet sind.

5. Elektro-Lastwagen (1) nach Anspruch 1, 2 oder 3, **dadurch gekennzeichnet, dass** mehrere Batterien (6, 6', 6"), vorzugsweise drei Batterien (6, 6', 6"),in dem Batteriegehäuse (8), jeweils voneinander beabstandet, angeordnet sind, wobei das Batteriegehäuse (8) zwischen den Fahrzeuglängsträgern (4, 4') derart angeordnet ist, dass es ober- und unterseitig über die Fahrzeuglängsträger (4, 4') übersteht.

6. Elektro-Lastwagen (1) nach Anspruch 4 oder 5, **dadurch gekennzeichnet, dass** die Batterien (6, 6', 6") in dem Batteriegehäuse (8) durch Gehäusezwischenwände voneinander getrennt angeordnet sind.

7. Elektro-Lastwagen (1) nach Anspruch 5, **dadurch gekennzeichnet, dass** in dem Batteriegehäuse (8) mindestens zwei Batterien (6, 6') angeordnet sind, wobei die, vorzugsweise zu Batteriemodulen zusammengefassten Batterien (6, 6') jeweils in einem Käfig (25, 25') formschlüssig aufgenommen sind.

8. Elektro-Lastwagen (1) nach Anspruch 6 oder 7, **dadurch gekennzeichnet, dass** die Käfige (25, 25') zur Aufnahme der Batterien (6,6'), vorzugsweise aus leichtem glasfaserverstärkten Kunststoff hergestellt sind und diese Käfige (6,6') innerhalb des Batteriegehäuses verklebt und/oder mittels einer weiteren größeren Käfigeinheit (29) gesichert werden, die ihrerseits innerhalb des Batteriegehäuses verklebt ist.

9. Elektro-Lastwagen (1) nach Anspruch 8, **dadurch gekennzeichnet, dass** die größere Käfigeinheit (29) mittels form- und kraftschlüssiger Spannelemente (30) innerhalb des Batteriegehäuses gesichert ist.

10. Elektro-Lastwagen (1) nach Anspruch 7 oder 8 oder 9, **dadurch gekennzeichnet, dass** die Käfige (6,6') oder die Käfigeinheit (29) über form- und kraftschlüssige Spannelemente (30'), die unmittelbar am Batteriegehäuse (8) abgestützt sind, gesichert sind oder ist.

11. Elektro-Lastwagen (1) nach einem oder mehreren der Ansprüche 1 bis 10, **dadurch gekennzeichnet, dass** das Batteriegehäuse (8) mehrere Einschübe aufweist, in die Batterien (6, 6', 6") derart einschiebbar sind, dass beim Einschiebevorgang der Batterien (6, 6', 6") über jeweils in den Einschüben angeordnete Steckkontakte diese Batterien (6, 6', 6") jeweils unmittelbar anschließbar sind.

12. Elektro-Lastwagen (1) nach Anspruch 11, **dadurch gekennzeichnet, dass** innerhalb der Elektrik des Elektro-Lastwagens (1) unterschiedliche Spannungsebenen vorgesehen sind, vorzugsweise betreffend die Fahrzeugelektrik, die Antriebselektrik und Kühlelektrik, wobei jeder Einschub des Batteriegehäuse (8) jeweils einer dieser Spannungsebenen zugeordnet ist und dementsprechend mit einer korrespondierenden Batterie (6, 6' oder 6") bestückt ist.

13. Elektro-Lastwagen (1) nach Anspruch 12, **dadurch gekennzeichnet, dass** die separaten Einschübe jeweils mit individuellen Steckerkupplungen zum Anschluss der korrespondierenden Batterie (6, 6' oder 6") versehen sind, wobei diese Batterien (6, 6' oder 6") ihrerseits jeweils mit, mit den individuellen Steckerkupplungen korrespondierenden, Steckern bestückt sind.

14. Elektro-Lastwagen (1) nach einem oder mehreren der vorhergehenden Ansprüche, **dadurch gekennzeichnet, dass** das Batteriegehäuse (8) ein Isoliergehäuse mit einer Doppelwandung ist, wobei zwischen der Innen- und der Außenwandung des Batteriegehäuses (8) ein poröses, vorzugsweise mikro- oder nanoporöses, Füllmaterial (20) angeordnet ist, das unter Ausbildung eines zumindest leichten Vakuums evakuiert ist, wobei das Füllmaterial (20) eine stützende Funktion besitzt, so dass das Batteriegehäuse (8) jeweils mit einer gestützten Vakuumisolierung versehen ist.

15. Elektro-Lastwagen (1) nach einem oder mehrerer der vorhergehenden Ansprüche , **dadurch gekennzeichnet, dass** der Ladekoffer (3) selbst als Sandwichelement derart ausgebildet ist, dass dessen Seitenwände (14), dessen Deckenelement (16) und/oder dessen Ladebordwand (15) jeweils eine Innen- und eine Außenwandung aufweisen, zwischen denen jeweils eine gestützte Vakuumisolierung angeordnet ist.

16. Elektro-Lastwagen (1) nach einem oder mehrerer der vorhergehenden Ansprüche, **dadurch gekennzeichnet, dass** die Ladebordwand (15) bedarfsweise als Bestandteil des Fahrgestells, die mit diesem verbunden ist oder als Bestandteil des Ladekoffers (3), die mit diesem verbunden ist, ausgebildet ist.

17. Elektro-Lastwagen (1) nach Anspruch 15 oder 16, **dadurch gekennzeichnet, dass** zumindest eine der Seitenwände (14) des Ladekoffers (3), insbesondere die der Fahrerkabine (2) des Elektro-Lastwagens (1) zugewandte Frontwand (13), auf ihrer dem Inneren des Ladekoffers (3) zugewandten Fläche inwändig mit einer Kühlfläche (24) bestückt ist.

18. Elektro-Lastwagen (1) nach einem oder mehreren der vorhergehenden Ansprüche 15bis 17, **dadurch gekennzeichnet, dass** das zur Ausbildung des Ladekoffers (3) ausgebildete Sandwichelement in Leichtbauweise aus Waben- oder Stabelementen hergestellt ist, wobei diese innenliegende Wabenstruktur mit leichtem, nanoporösen Füllmaterial (20), insbesondere Dämmstoffgranulat, gefüllt ist, und diese Wabenstruktur zur Ausbildung des Sandwichelementes beidseitig mit Deckplatten (21, 21') beklebt ist.

19. Elektro-Lastwagen (1) nach einem oder mehreren der vorhergehenden Ansprüche, **dadurch gekennzeichnet, dass** dem Ladekoffer (3) wenigstens ein elektrisches Kühlaggregat (17) zugeordnet ist.

20. Elektro-Lastwagen (1) nach Anspruch 19, **dadurch gekennzeichnet, dass** das oder die Kühlaggregat/e (17) auf dem Dach der Fahrerkabine (2) des Elektro-Lastwagens (1) und/oder Kühlaggregate unterhalb des Kofferbodens, vorzugsweise in einem separaten Gehäuseabschnitt, angeordnet ist bzw. sind.

21. Elektro-Lastwagen (1) nach einem oder mehreren der vorhergehenden Ansprüche, **dadurch gekennzeichnet, dass** im Ladebetrieb des Elektro-Lastwagens (1) in das Batteriegehäuse (8) Phase-Change-Material (PCM) -Batterien einsetzbar sind, wobei dann im Fahrbetrieb des Elektro-Lastwagens (1) die Kühlung des Ladekoffers (3) derart realisierbar ist, dass die PCM-Batterien mittels entsprechender Wärmeübetrager ihre gespeicherte Wärmeenergie an den Ladekoffer (3) abgeben.

22. Elektro-Lastwagen (1) nach einem oder mehreren der vorhergehenden Ansprüche, **dadurch gekennzeichnet, dass** dem Ladekoffer (3) zusätzlich oder alternativ regenerative Kühlelemente, vorzugsweise auf Zeolith-/ Wasserbasis, zugeordnet sind.

23. Elektro-Lastwagen (1) nach einem oder mehreren der vorhergehenden Ansprüche, **dadurch gekennzeichnet, dass** zur Beheizung des Ladekoffers (3) in die Wandelemente und/oder den Kofferboden (5) des Ladekoffers (3) regenerierbare Wärmespeicher und/oder elektrische Heizelemente integriert sind.

24. Elektro-Lastwagen (1) nach einem oder mehreren der vorhergehenden Ansprüche, **dadurch gekennzeichnet, dass** das Deckenelement (16) und/oder die Seitenwände (14) des Ladekoffers (3) außenseitig mit Solarmodulen, vorzugsweise mit flexiblen Dünnschicht-Solarmodulen, beklebbar ist bzw. sind, wobei mittels dieser Solarmodule eine Nachladung der in dem Batteriegehäuse (8) des Elektro-Lastwagens (1) aufgenommenen Batterien (6, 6', 6") im Fahrbetrieb sichergestellt ist.

25. Elektro-Lastwagen (1) nach einem oder mehreren der vorhergehenden Ansprüche, **dadurch gekennzeichnet, dass** der Elektro-Lastwagen (1) mit einer Datenerfassungseinheit verbunden ist, die vorzugsweise Standort, Batteriezustand, Innentemperatur des Ladekoffers (3) und/oder sonstige Fahrzeugdaten des Elektro-Lastwagens (1) erfasst und drahtlos, vorzugsweise per Telemetrie, an einen Zentralrechner zum Flottenmanagement der angeschlossenen Elektro-Lastwagen (1) übermittelt.
